# FASCICULE DE BREVET EUROPEEN

(11) **EP 0 615 880 B1**
(45) Date de publication et mention de la délivrance du brevet: **15.07.1998**
(21) Numéro de dépôt: 94400582.6
(22) Date de dépôt: 17.03.1994
(51) Int. Cl.: B60Q 1/068

(54) **Bouton pour le réglage de l'orientation d'un faisceau de projecteur de véhicule automobile**
Einstellungsknopf zur Orientierung des Lichtbundels von Fahrzeugscheinwerfern
Button for adjusting the orientation of vehicle headlights

(30) Priorité: 18.03.1993 FR 9303137
(43) Date de publication de la demande: 21.09.1994
(73) Titulaire: VALEO VISION, 93000 Bobigny (FR)
(72) Inventeur: Gonzalez Gallegos, Fermin, E-23600 Martos (ES); Mora Mediano, Luis, E-23600 Martos (ES)
(74) Mandataire: Martin, Jean-Jacques

(56) Documents cités:
- DE-A- 4 013 893
- FR-A- 2 319 512

## Description

La présente invention a trait d'une façon générale aux dispositifs de réglage de l'orientation des réflecteurs dans des projecteurs de véhicules automobiles.

Il est bien connu d'équiper certains projecteurs de moyens de réglage manuel de l'orientation du miroir, afin de faire varier la direction du faisceau émis en site ou en azimut.

Un tel organe de réglage manuel peut se présenter sous la forme d'un bouton rotatif monté sur le boîtier du projecteur, avec des formes de réalisation plus ou moins complexes. Un tel organe de réglage comprend classiquement une partie de manoeuvre accessible à l'opérateur et une partie de montage reliée à la partie de manoeuvre et par laquelle le bouton est monté à rotation sur le projecteur.

Le document FR-A-2 319 512 décrit un bouton de réglage dans lequel la partie de manoeuvre coopère avec la partie de montage par vissage, avec positions stables tous les 180°, et une tige filetée est vissée dans la partie de manoeuvre pour le réglage du zéro.

Le document DE-A-40 13 893 décrit quant à lui un bouton dans lequel une tige filetée est fixée à la partie de manoeuvre, et le réglage s'effectue par rotation relative de la tige filetée et d'un autre organe situé à l'intérieur du boîtier de projecteur et relié au miroir.

Par rapport à ces solutions connues, l'invention vise à proposer un bouton qui soit simple et économique à réaliser, qui permette d'assurer une bonne étanchéité et une bonne compensation des jeux lors de son montage sur le boîtier, et qui soit indémontable.

En outre, lors de la conception d'un tel projecteur, on prend généralement le parti d'avoir un organe de réglage manuel, tel qu'un bouton rotatif, conçu spécifiquement en fonction d'un accès par le dessus du projecteur, par l'arrière du projecteur ou dans certains cas par l'avant du projecteur, et en fonction de la configuration des parties avoisinantes du véhicule.

Cette contrainte est indésirable, notamment dans le cas où l'on souhaite pouvoir utiliser des projecteurs ayant des organes communs ou semblables dans des véhicules différents.

Ainsi, par exemple, un projecteur équipé d'un bouton de réglage à accès arrière, conçu pour un certain véhicule, pourra s'avérer délicat à implanter dans un véhicule de type différent, où l'accès au bouton pourra être rendu extrêmement difficile à cause de la présence d'autres organes.

Ainsi la présente invention vise subsidiairement à proposer un bouton de réglage qui puisse être implanté dans des projecteurs destinés à des véhicules différents, avec plusieurs possibilités d'accès en fonction de la disposition des organes dans le véhicule en question.

Plus généralement, il peut s'avérer souhaitable de laisser à l'opérateur le choix d'une intervention sur le bouton de réglage selon l'une parmi une pluralité de directions d'accès, avec la main ou à l'aide d'un outil.

La présente invention vise à pallier les problèmes de l'art antérieur et à atteindre ces objectifs.

Elle concerne à cet effet un bouton de réglage pour modifier l'orientation d'une partie mobile telle qu'un miroir d'un projecteur de véhicule automobile, du type comprenant une partie de montage, avec possibilité de rotation autour d'un axe, sur une région fixe du véhicule telle que le boîtier du projecteur, et une partie de manoeuvre accessible aux doigts d'un opérateur ou à un outil,
caractérisé en ce que la partie de montage comprend un fût comportant une cavité taraudée intérieurement pour recevoir une tige filetée non-tournante reliée au miroir, ledit fût définissant dans une région d'extrémité libre opposée à ladite partie de manoeuvre au moins deux dents flexibles d'accrochage sur un bord d'extrémité intérieure d'un manchon formé dans ladite région fixe du véhicule pour le montage indémontable dudit bouton par introduction dudit fût dans ledit manchon de manière à éviter la translation du bouton, et en ce que lesdites parties de montage et de manoeuvre sont formées d'un seul tenant.

Le bouton comprend de préférence deux dents d'accrochage séparées l'une de l'autre par deux encoches formées dans des régions diamétralement opposées du fût à partir de son extrémité libre.

Il est avantageusement prévu dans la partie de manoeuvre une cloison d'obturation de la cavité taraudée du fût.

Selon un mode de réalisation particulier, le bouton comporte dans une région intermédiaire entre la partie de manoeuvre et la partie de montage un épaulement pour l'appui d'un joint élastique d'étanchéité et de compensation de jeux.

Selon une autre caractéristique préférée, la partie de manoeuvre comprend une partie généralement discoïdale essentiellement concentrique avec l'axe de rotation du bouton, cette partie discoïdale présentant, sur une face tournée vers ladite partie de montage, une cavité annulaire, et sur la face opposée, une surface annulaire généralement convexe, une pluralité de nervures font saillie sur ladite surface convexe et s'étendent dans une direction généralement radiale, et une pluralité de dents font saillie vers l'intérieur de ladite cavité dans une direction générale radiale.

Avantageusement, ladite partie de manoeuvre comprend en outre, du côté de la partie discoïdale opposé à la partie de montage, une partie de section non circulaire destinée à la manoeuvre du bouton à l'aide d'une clé, qui peut présenter une section extérieure polygonale et un renfoncement de section intérieure polygonale débouchant sur une face terminale de ladite partie.

Préférentiellement, lesdites dents sont formées dans une région périphérique de ladite partie discoïdale et s'étendent radialement vers l'intérieur dans ladite cavité.

Cette région périphérique est de préférence évasée vers l'extérieur de la cavité, lesdites dents ayant une hauteur qui croît du fond de la cavité vers l'extérieur et présentant une section généralement triangulaire.

Il est par ailleurs avantageux que lesdites nervures fassent saillie radialement vers l'extérieur au delà du bord périphérique de la partie discoïdale, et à partir de ladite partie annulaire convexe sur toute l'étendue radiale de cette dernière, et se terminent par un bord libre s'étendant dans une direction générale transversale à l'axe de rotation.

La partie discoïdale peut également définir du côté des nervures une deuxième cavité annulaire, s'étendant radialement vers l'intérieur par rapport auxdites nervures.

Dans ce cas, certaines desdites nervures sont avantageusement prolongées radialement vers l'intérieur de manière à séparer ladite deuxième cavité annulaire en plusieurs secteurs.

Il est également préférable que la partie discoïdale comprenne, du côté de la première cavité et radialement à l'intérieur de celle-ci, une série de deuxièmes dents orientées essentiellement radialement, ces dernières possédant une hauteur qui croît de l'intérieur vers l'extérieur et une section généralement triangulaire.

L'invention concerne également un projecteur pour véhicule automobile, du type comprenant un boîtier abritant une lampe et un réflecteur et fermé par une glace, et une tige de commande de l'orientation du réflecteur s'appuyant sur l'arrière de celui-ci et déplaçable en translation, caractérisé en ce que ladite tige de commande est déplacée par un bouton de réglage tel que défini ci-dessus, monté sur ledit boîtier.

Selon un mode de réalisation particulier, le boîtier comporte un manchon rentrant destiné à recevoir de façon indémontable la partie de montage du bouton de réglage.

Ce boîtier comporte avantageusement dans la région où ledit manchon rentrant débouche sur l'extérieur une gorge annulaire pour le positionnement d'un joint élastique d'étanchéité et de compensation de jeux.

Enfin on propose un tel projecteur, caractérisé en ce que le boîtier comporte sur sa surface extérieure au moins un aménagement de guidage d'un outil destiné à coopérer avec la partie de manoeuvre du bouton de réglage.

D'autres aspects, buts et avantages de la présente invention apparaîtront mieux à la lecture de la description détaillée suivante d'une forme de réalisation préférée de celle-ci, donnée à titre d'exemple et faite en référence au dessin annexé, sur lequel :
la figure 1 est une vue partiellement en coupe verticale parallèlement à l'axe optique et partiellement en perspective d'un projecteur équipé d'un bouton de réglage selon la présente invention,
la figure 2 est une vue en élévation de l'avant du bouton de réglage du projecteur de la figure 1,
la figure 3 est une vue en élévation de l'arrière du même bouton de réglage,
la figure 4 est une vue de dessus du bouton de réglage des figures 2 et 3, et
la figure 5 est une vue en coupe horizontale du bouton de réglage des figures 2 à 4.

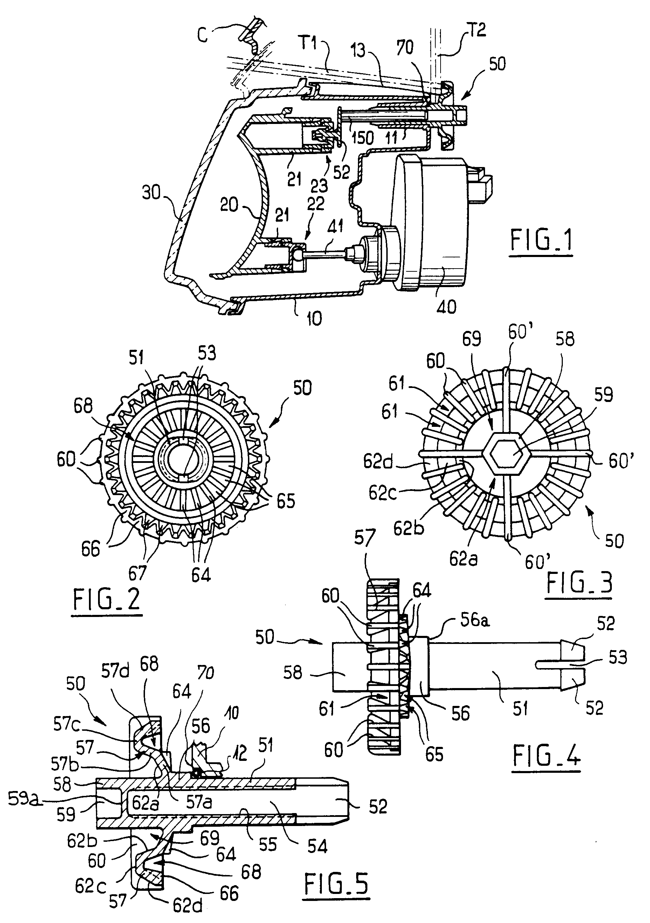

En référence tout d'abord à la figure 1, on a représenté un projecteur qui comprend classiquement un boîtier 10 abritant un miroir 20 portant une lampe (non représentée) et fermé à l'avant par une glace 30.

L'orientation du miroir est réglable d'une part à l'aide d'un correcteur à moteur électrique indiqué globalement en 40, qui est monté sur la paroi arrière du boîtier 10 et dont une tige de commande 41, mobile en translation selon son axe, pénètre à l'intérieur dudit boîtier.Une extrémité sphérique de la tige 41 est engagée dans un siège sphérique complémentaire défini dans une pièce 22 montée sur des branches 21 faisant saillie vers l'arrière du miroir 20.

En outre, un bouton de réglage manuel 50 est également monté dans la paroi arrière du boîtier 10, au-dessus du correcteur motorisé 40, et commande la translation d'une autre tige de commande 150 dont une tête terminale sphérique, décalée en hauteur, est reçue dans un élément formant siège sphérique 23 monté sur d'autres branches 21 s'étendant vers l'arrière du miroir 20.

La rotation manuelle du bouton 50 détermine via la tige 150 une variation d'inclinaison du miroir et donc une variation de l'orientation en site du faisceau engendré.

On va maintenant décrire en référence aux figures 2 à 5 le bouton de réglage selon l'invention.

Celui-ci est réalisé d'un seul tenant et présente une forme générale de révolution. Un fût allongé 51, cylindrique de révolution, est destiné au montage du bouton 50 dans une partie 11 formant manchon rentrant (voir figure 1) de la paroi arrière du boîtier.

Ce fût se termine à une extrémité libre (à droite sur la figure 4) par deux pattes d'ancrage 52, chacune de forme semi-cylindrique et séparées par deux fentes longitudinales 53 diamétralement opposées. Ces pattes 52 définissent chacune un épaulement annulaire saillant destiné à coopérer avec le bord terminal intérieur du manchon 11 du boîtier pour assurer le montage du bouton sur le boîtier avec possibilité de rotation.

Ainsi le bouton présente une structure particulièrement simple et économique. Il peut être réalisé d'une seule pièce obtenue par moulage de matière plastique, et ne nécessite aucune pièce ou organe complémentaire pour assurer son montage sur le boîtier de projecteur. Ce montage est par ailleurs indémontable, ce qui est une autre caractéristique avantageuse.

Le fût 51 présente dans une région intermédiaire un élargissement 56 définissant un épaulement annulaire saillant contre lequel un joint torique 70 en matière élastomère, reçu dans une gorge annulaire 12 formée dans la face arrière du boîtier 10 autour de l'entrée du manchon 11 (voir figures 1 et 5), peut venir s'appliquer. Ce joint 70 permet à la fois d'assurer un montage étanche du bouton 50 sur le boîtier 10 et de compenser les jeux de montage, qui autrement induiraient une incertitude dans le positionnement angulaire du miroir, tel que déterminé par la position du bouton comme on va le voir ci-dessous.

Le fût 51 définit en outre un alésage axial intérieur 54 dans lequel est formé un taraudage 55. Ce dernier est destiné à coopérer avec un filetage formé sur la tige de commande 150 pour induire une translation de celle-ci lors de la mise en rotation du bouton 50. On observera ici que, dans le cas de la réalisation du bouton par moulage, le démoulage s'effectuera facilement par rotation de l'élément de moule formant le taraudage 55 selon l'axe de celui-ci.

Le bouton de réglage 50 comprend généralement deux parties de manoeuvre pour effectuer cette rotation.

La première est formée dans la région 58 de l'extrémité libre du fût 51 opposée aux pattes d'ancrage 52. Dans cette région 58, le bouton présente une section extérieure hexagonale (voir figure 3), et un renfoncement axial 59, de section également hexagonale, est formé dans la face terminale de la partie 58. Ainsi le bouton 50 peut être manoeuvré soit à l'aide d'une clé anglaise, clé à pipe ou clé à tube, soit encore à l'aide d'une clé de type "Allen" de section hexagonale à six pans extérieurs, introduite dan le renfoncement 59.

On observera ici qu'une cloison transversale 59a (figure 5) permet d'isoler le renfoncement 59, destiné à un outil, de l'alésage 54, de manière à n'établir aucune communication entre l'intérieur du boîtier, via ledit alésage, et l'extérieur, et donc de garantir l'étanchéité.

La deuxième partie de manoeuvre est constituée par une partie généralement discoïdale 57 s'étendant radialement vers l'extérieur à partir d'une région du fût 51 qui est intermédiaire entre l'élargissement 56 et la partie terminale hexagonale 58.

Cette partie 57, comme le montre en particulier la figure 5, présente une section sinueuse avec, radialement de l'intérieur vers l'extérieur, une courte partie 57a fortement évasée vers l'extérieur en direction de la partie terminale 58, une partie 57b légèrement évasée dans la même direction, une partie transversale 57c, sommitale, et enfin une partie 57d évasée vers l'extérieur dans une direction opposée aux parties 57a et 57b. Les surfaces des parties 57a-57d tournées vers l'arrière du bouton (vers la gauche sur la figure 5) sont désignées par 62a-62d.

Le fût et les parties 57a et 57b définissent conjointement une région annulaire en creux 69 tournée vers l'arrière, tandis que les parties 57b, 57c et 57d définissent une région annulaire en creux 68 tournée vers l'avant.

Dans sa partie discoïdale 57, le bouton comporte un ensemble de nervures 60 régulièrement espacées angulairement, orientées radialement et délimitant entre elles autant de cavités 61 (figure 4). Ces nervures s'étendent, en direction radiale, à partir de la région de transition entre les parties 57a et 57b et jusque légèrement au delà du bord circulaire extérieur de la partie 57d. Leurs bords en direction radiale sont généralement parallèles à l'axe de rotation du bouton.

En direction axiale, ces nervures 60 s'étendent de la partie 57 jusqu'à un bord postérieur généralement droit et perpendiculaire à l'axe du bouton.

Les nervures 60 présentent de préférence des bords libres arrondis.

On trouve également quatre nervures prolongées 60', décalées mutuellement de 90°, qui se distinguent des nervures 60 en ce qu'elles rejoignent le fût 51, radialement vers l'intérieur. Ces nervures prolongées 60' divisent en quatre secteurs égaux la région annulaire en creux 69.

Du côté de l'avant (vers la droite sur les figures 4 et 5), la partie 57 comporte une pluralité de dents 66 qui font saillie dans la cavité annulaire 68 et délimitent entre elles autant de cavités 67 (voir figure 2). Plus précisément, ces dents 66 sont formées en direction radiale le long de la paroi, tournée vers l'avant, de la partie radialement extérieure 57d, en suivant généralement son inclinaison. On observe toutefois sur la figure 5 que la hauteur de ces dents croît progressivement à partir du fond du creux annulaire 68. En outre, on observe sur la figure 2 que ces dents ont une section généralement triangulaire, leur épaisseur diminuant à partir de la partie 57d.

Les cavités 67 définies entre les dents 66 sont sensiblement évasées, en étant délimitées par des surfaces en vis-à-vis qui sont inclinées l'une par rapport à l'autre.

Le bouton de réglage 50 comporte enfin, au niveau de la face de la partie 57a tournée vers l'avant (vers la droite sur les figures 4 et 5), une pluralité de dents 64, orientées radialement et régulièrement espacées angulairement, qui définissent entre elles autant de cavités 65. Les dents 64 ont une hauteur qui croît progressivement dans la direction radiale, de l'intérieur vers l'extérieur, et une section généralement triangulaire. Les cavités 65 sont donc évasées dans la direction circonférentielle, en étant délimitées latéralement par des faces mutuellement inclinées.

De retour à la figure 1, on observe que le bouton 50 est reçu sur le boîtier 10 dans une position telle que sa partie discoïdale 57 fait légèrement saillie vers le haut au delà de la paroi supérieure du boîtier, de manière à laisser la région en creux 68 accessible depuis l'avant du projecteur.

Comme on l'a indiqué, le bouton 50 peut être manoeuvré à l'aide d'une clé engagée sur le profil hexagonal mâle ou femelle de la partie d'extrémité 58.

Le bouton peut également être manoeuvré manuellement dans la région postérieure du projecteur, les nervures 60 remplissant une fonction analogue à celle d'un moletage, empêchant les doigts de l'opérateur de glisser.

Enfin le bouton peut être manoeuvré avec la pointe d'un outil allongé tel qu'un tournevis (à lame plate, voire cruciforme), que l'on peut orienter selon une pluralité de directions grâce à la configuration de nervures et de dents de la partie 57. Plus précisément, on a représenté en traits mixtes et désigné par T1 une première orientation d'un tournevis, s'étendant immédiatement au-dessus du boîtier 10 et dont l'extrémité est engagée dans la partie annulaire en creux 68. Les dents 66 permettent d'assurer l'effet d'accrochage qui permet au bouton de tourner lorsque le tournevis est sollicité dans la direction appropriée. Cette action sur le bouton peut s'effectuer une fois que capot avant C du véhicule a été légèrement ouvert, comme illustré en traits pleins. Avantageusement, le boîtier 10 du projecteur est conformé au niveau de sa paroi supérieure de manière à assurer un guidage de l'outil T1. En l'espèce, ce guidage est assuré par un pan incliné 13, par exemple prévu au fond d'une gorge (non visible), dans la paroi supérieure du boîtier.

Une orientation verticale du tournevis à partir du dessus, désignée par T2 et indiquée également en traits mixtes, est également possible. Dans ce cas, la pointe du tournevis vient s'engager dans l'espace 65 existant entre deux dents 64, et une rotation du bouton 50 s'effectue, selon le type de coopération de la pointe du tournevis avec les parois délimitant l'espace 65, soit en faisant tourner le tournevis, doit en exerçant un effort tendant à translater sa pointe selon une direction circonférentielle. Là encore, le boîtier peut être aménagé, au niveau de la région de sa paroi arrière située immédiatement au-dessus du bouton, pour guider l'outil. Il peut s'agir par exemple d'un prolongement de la gorge précitée sur ladite paroi arrière.

En outre, le tournevis orienté verticalement peut également être appliqué du côté opposé de la partie 57, sa pointe coopérant avec les nervures 60 pour provoquer la rotation.

De plus, on peut également agir avec la pointe d'un outil tel qu'un tournevis engagée dans l'espace 61 séparant deux nervures 60. Cette solution, bien qu'elle offre un calage moins stable de ladite pointe sur le bouton, permet d'effectuer une rotation du bouton avec une inclinaison du tournevis partiquement quelconque, entre environ -90° et +90° de part et d'autre de la verticale.

Par ailleurs, une pointe d'outil peut être engagée dans la région en creux 69 et coopérer avec l'une des nervures prolongées 60', ou encore avec la région radialement intérieure des nervures 60, pour effectuer la rotation.

On observera ici que la forme évasée des espaces 65 et 67 qui séparent les nervures 64 et 66, respectivement, facilite l'engagement de la pointe de l'outil dans ces espaces lors des opérations ci-dessus.

Bien entendu, la présente invention n'est nullement limitée à la forme de réalisation décrite et représentée, mais l'homme de l'art saura y apporter toute variante ou modification conforme à son esprit.

On notera pour terminer que la partie de manoeuvre du bouton selon l'invention pourra être utilisée avec une partie de montage différente de celle qui a été décrite et représentée.

## Revendications

1. Bouton de réglage pour modifier l'orientation d'une partie mobile telle qu'un miroir (20) d'un projecteur de véhicule automobile, du type comprenant une partie de montage (51, 52), avec possibilité de rotation autour d'un axe, sur une région fixe du véhicule telle que le boîtier (10) du projecteur, et une partie de manoeuvre (57, 58) accessible aux doigts d'un opérateur ou à un outil, caractérisé en ce que la partie de montage comprend un fût (51) comportant une cavité (54) taraudée intérieurement (55) pour recevoir une tige filetée non-tournante (150) reliée au miroir, ledit fût définissant dans une région d'extrémité libre opposée à ladite partie de manoeuvre au moins deux dents flexibles (52) d'accrochage sur un bord d'extrémité intérieure d'un manchon (11) formé dans ladite région fixe du véhicule pour le montage indémontable dudit bouton par introduction dudit fût dans ledit manchon de manière à éviter la translation du bouton, et en ce que lesdites parties de montage et de manoeuvre sont formées d'un seul tenant.

2. Bouton de réglage selon la revendication 1, caractérisé en ce qu'il comprend deux dents d'accrochage (52) séparées l'une de l'autre par deux encoches (53) formées dans des régions diamétralement opposées du fût à partir de son extrémité libre.

3. Bouton de réglage selon la revendication 1 ou 2, caractérisé en ce qu'il est prévu dans la partie de manoeuvre une cloison (59a) d'obturation de la cavité taraudée (54) du fût.

4. Bouton de réglage selon l'une des revendications 1 à 3, caractérisé en ce qu'il comporte dans une région intermédiaire (56) entre la partie de manoeuvre et la partie de montage un épaulement (56a) pour l'appui d'un joint élastique (70) d'étanchéité et de compensation de jeux.

5. Bouton de réglage selon l'une des revendications 1 à 4, caractérisé en ce que la partie de manoeuvre comprend une partie généralement discoïdale (57) essentiellement concentrique avec l'axe de rotation du bouton, cette partie discoïdale présentant, sur une face tournée vers ladite partie de montage, une cavité annulaire (68), et sur la face opposée, une surface annulaire généralement convexe (62b, 62c, 62c), en ce qu'une pluralité de nervures (60) font saillie sur ladite surface convexe et s'étendent dans une direction généralement radiale, et en ce qu'une pluralité de dents (66) font saillie vers l'intérieur de ladite cavité (68) dans une direction générale radiale.

6. Bouton de réglage selon la revendication 5, caractérisé en ce que ladite partie de manoeuvre comprend en outre, du côté de la partie discoïdale opposé à la partie de montage, une partie (58) de section non circulaire destinée à la manoeuvre du bouton à l'aide d'une clé.

7. Bouton de réglage selon l'une des revendications 5 et 6, caractérisé en ce que ladite partie de section non circulaire (58) présente une section extérieure polygonale et un renfoncement (59) de section intérieure polygonale débouchant sur une face terminale de ladite partie.

8. Bouton de réglage selon l'une des revendications 5 à 7, caractérisé en ce que lesdites dents (66) sont formées sur une région périphérique (57d) de ladite partie discoïdale et s'étendent radialement vers l'intérieur dans ladite cavité (68).

9. Bouton de réglage selon la revendication 8, caractérisé en ce que ladite région périphérique (57d) est évasée vers l'extérieur de la cavité, et en ce que lesdites dents (66) ont une hauteur qui croît du fond de la cavité vers l'extérieur et présentent une section généralement triangulaire.

10. Bouton de réglage selon l'une des revendications 5 à 9, caractérisé en ce que lesdites nervures (60) font saillie radialement vers l'extérieur au delà du bord périphérique de la partie discoïdale (57).

11. Bouton de réglage selon la revendication 10, caractérisé en ce que lesdites nervures (60) font saillie à partir de ladite partie annulaire convexe (57b, 57c, 57d) sur toute l'étendue radiale de cette dernière, et se terminent par un bord libre s'étendant dans une direction générale transversale à l'axe de rotation.

12. Bouton de réglage selon la revendication 11, caractérisé en ce que la partie discoïdale définit du côté des nervures (60) une deuxième cavité annulaire (69), s'étendant radialement vers l'intérieur par rapport auxdites nervures.

13. Bouton de réglage selon la revendication 12, caractérisé en ce que certaines (60') desdites nervures sont prolongées radialement vers l'intérieur de manière à séparer ladite deuxième cavité annulaire (69) en plusieurs secteurs.

14. Bouton de réglage selon la revendication 12 ou 13, caractérisé en ce que ladite partie discoïdale (57) comprend, du côté de la première cavité (68) et radialement à l'intérieur de celle-ci, une série de deuxièmes dents (64) orientées essentiellement radialement.

15. Bouton de réglage selon la revendication 14, caractérisé en ce que lesdites deuxièmes dents (64) ont une hauteur qui croît de l'intérieur vers l'extérieur et présentent une section généralement triangulaire.

16. Projecteur pour véhicule automobile, du type comprenant un boîtier (10) abritant une lampe et un réflecteur (20) et fermé par une glace (30), et une tige de commande (150) de l'orientation du réflecteur s'appuyant sur l'arrière de celui-ci et déplaçable en translation, caractérisé en ce que ladite tige de commande est déplacée par un bouton de réglage (50) selon l'une des revendications précédentes, monté sur ledit boîtier (10).

17. Projecteur selon la revendication 16, caractérisé en ce que le boîtier comporte un manchon rentrant (11) destiné à recevoir de façon indémontable la partie de montage (51) du bouton de réglage (50).

18. Projecteur selon la revendication 17, caractérisé en ce que le boîtier comporte dans la région où ledit manchon rentrant débouche sur l'extérieur une gorge annulaire (12) pour le positionnement d'un joint élastique (70) d'étanchéité et de compensation de jeux.

19. Projecteur selon la revendication 16, caractérisé en ce que son boîtier comporte sur sa surface extérieure au moins un aménagement (13) de guidage d'un outil destiné à coopérer avec la partie de manoeuvre du bouton de réglage.

## Claims

1. An adjustment knob for altering the orientation of a moveable portion such as a mirror (20) of an automotive vehicle headlamp, of the type comprising a mounting portion (51, 52), with the possibility of rotation around an axis, on a fixed region of the vehicle such as the housing (10) of the headlamp, and a control portion (57, 58) accessible to the fingers of an operator or to a tool,
**characterised in that** the mounting portion comprises a shaft (51) having a cavity (54) threaded internally (55) to receive a non-rotating threaded rod (150) connected to the mirror, the said shaft defining in a free end region opposite the said control portion at least two flexible teeth (52) for hooking onto an interior end edge of a sleeve (11) formed in the said fixed region of the vehicle for the non-detachable mounting of the said knob by the introduction of the said shaft into the said sleeve so as to avoid the translational movement of the knob,
**and in that** the said mounting and control portions are formed in a single piece.

2. An adjustment knob according to Claim 1,
**characterised in that** it comprises two hooking teeth (52) separated from one another by two notches (53) formed in diametrically opposite regions of the shaft from its free end.

3. An adjustment knob according to Claim 1 or 2,
**characterised in that** provided in the control portion is a partition (59a) for sealing the threaded cavity (54) of the shaft.

4. An adjustment knob according to one of Claims 1 to 3,
**characterised in that** it comprises, in an intermediate region (56) between the control portion and the mounting portion, a shoulder (56a) for the support of a resilient seal (70) for tightness and clearance compensation.

5. An adjustment knob according to one of Claims 1 to 4,
**characterised in that** the control portion comprises a generally discoidal portion (57) essentially concentric with the axis of rotation of the knob, this discoidal portion having, on a face turned towards the said mounting portion, an annular cavity (68), and on the opposite face, a generally convex annular surface (62b, 62c, 62c),
**in that** a plurality of ribs (60) protrude on the said convex surface and extend in a generally radial direction,
**and in that** a plurality of teeth (66) protrude towards the interior of the said cavity (68) in a general radial direction.

6. An adjustment knob according to Claim 5,
**characterised in that** the said control portion also comprises, on the side of the discoidal portion opposite the mounting portion, a portion (58) having a non-circular section intended for the control of the knob by means of a key.

7. An adjustment knob according to one of Claims 5 and 6,
**characterised in that** the said portion having a non-circular section (58) has a polygonal exterior section and a recess (59) with a polygonal interior section opening onto an end face of the said portion.

8. An adjustment knob according to one of Claims 5 to 7,
**characterised in that** the said teeth (66) are formed on a peripheral region (57d) of the said discoidal portion and extend radially towards the interior in the said cavity (68).

9. An adjustment knob according to Claim 8,
**characterised in that** the said peripheral region (57d) is flared towards the exterior of the cavity,
**and in that** the said teeth (66) have a height which increases from the base of the cavity towards the exterior and have a generally triangular section.

10. An adjustment knob according to one of Claims 5 to 9,
**characterised in that** the said ribs (60) protrude radially towards the outside beyond the peripheral edge of the discoidal portion (57).

11. An adjustment knob according to Claim 10,
**characterised in that** the said ribs (60) protrude from the said convex annular portion (57b, 57c, 57d) over the whole radial range of the latter, and end in a free edge extending in a general direction at right angles to the axis of rotation.

12. An adjustment knob according to Claim 11,
**characterised in that** the discoidal portion defines on the side of the ribs (60) a second annular cavity (69) extending radially towards the interior with respect to the said ribs.

13. An adjustment knob according to Claim 12,
**characterised in that** certain (60') of the said ribs are extended radially towards the interior so as to divide the said second annular cavity (69) into several sectors.

14. An adjustment knob according to Claim 12 or 13,
**characterised in that** the said discoidal portion (57) comprises, on the side of the first cavity (68) and radially inside it, a series of second teeth (64) oriented essentially radially.

15. An adjustment knob according to Claim 14,
**characterised in that** the said second teeth (64) have a height which increases from the interior towards the exterior and have a generally triangular section.

16. A headlamp for an automotive vehicle, of the type comprising a housing (10) sheltering a lamp and a reflector (20) and closed by glass (30), and a control rod (150) for the orientation of the reflector resting on the rear thereof and capable of translational motion,
**characterised in that** the said control rod is displaced by an adjustment knob (50) according to one of the preceding claims, mounted on the said housing (10).

17. A headlamp according to Claim 16,
**characterised in that** the housing comprises an re-entrant sleeve (11) intended to receive the mounting portion (51) of the adjustment knob (50) in a non-detachable manner.

18. A headlamp according to Claim 17,
**characterised in that** the housing comprises, in the region where the said re-entrant sleeve opens onto the exterior, an annular grove (12) for the positioning of a resilient seal (70) for tightness and clearance compensation.

19. A headlamp according to Claim 16,
**characterised in that** its housing comprises on its outer surface at least one fitting (13) for guiding a tool intended to cooperate with the control portion of the adjustment knob.

## Patentansprüche

1. Einstellknopf zur Änderung der Orientierung eines beweglichen Teils, etwa eines Spiegels (20) eines Kraftfahrzeugscheinwerfers, umfassend einen drehbeweglich um eine Achse gelagerten Montageteil (51, 52) für die Anbringung an einem ortsfesten Bereich des Fahrzeugs, wie etwa am Gehäuse (10) des Scheinwerfers, und einen für die Finger eines Benutzers oder für ein Werkzeug zugänglichen Betätigungsteil (57, 58), **dadurch gekennzeichnet**, daß der Montageteil einen Schaft (51) umfaßt, der eine Aufnahme (54) mit Innengewinde (55) enthält, um einen mit dem Spiegel verbundenen nicht drehbaren Gewindestift (150) aufzunehmen, wobei der besagte Schaft in einem dem besagten Betätigungsteil gegenüberliegenden freien Abschlußbereich mindestens zwei biegsame Eingriffzähne (52) für das Einsetzen an einer inneren Abschlußkante einer Muffe (11) definiert, die in dem besagten ortsfesten Bereich des Fahrzeugs für die nicht demontierbare Montage des besagten Einstellknopfes durch Einführung des besagten Schafts in die besagte Muffe ausgebildet ist, um die Verschiebung des Einstellknopfes zu verhindern, und daß die besagten Montage- und Betätigungsteile einstückig ausgebildet sind.

2. Einstellknopf nach Anspruch 1, **dadurch gekennzeichnet,** daß er zwei Eingriffzähne (52) umfaßt, die durch zwei Ausklinkungen (53) voneinander getrennt sind, die in diametral gegenüberliegenden Bereichen des Schafts von seinem freien Ende aus ausgebildet sind.

3. Einstellknopf nach Anspruch 1 oder 2,**dadurch gekennzeichnet,** daß im Betätigungsteil eine Trennwand (59a) zum Verschluß der Gewindeaufnahme (54) des Schafts vorgesehen ist.

4. Einstellknopf nach einem der Ansprüche 1 bis 3, **dadurch gekennzeichnet,** daß er in einem Zwischenbereich (56) zwischen dem Betätigungsteil und dem Montageteil eine Schulter (56a) für die Auflage eines elastischen Dichtungs- und Spielausgleichelements (70) umfaßt.

5. Einstellknopf nach einem der Ansprüche 1 bis 4, **dadurch gekennzeichnet,** daß der Betätigungsteil einen allgemein scheibenförmigen Teil (57) umfaßt, der im wesentlichen konzentrisch mit der Drehachse des Einstellknopfes angeordnet ist, wobei dieser scheibenförmige Teil auf einer zu dem besagten Montageteil gerichteten Seite eine ringförmige Aufnahme (68) und auf der gegenüberliegenden Seite eine allgemein konvexe ringförmige Fläche (62b, 62c, 62d) aufweist, daß eine Mehrzahl von Rippen (60) auf der besagten konvexen Fläche vorstehen und sich in einer allgemein radialen Richtung erstrecken und daß eine Mehrzahl von Zähnen (66) zum Innern der besagten Aufnahme (68) in einer allgemein radialen Richtung vorstehen.

6. Einstellknopf nach Anspruch 5, **dadurch gekennzeichnet,** daß der besagte Betätigungsteil außerdem auf der Seite des scheibenförmigen Teils, die dem Montageteil gegenüberliegt, einen Teil (58) mit nicht kreisförmigem Querschnitt für die Betätigung des Einstellknopfs anhand eines Schlüssels umfaßt.

7. Einstellknopf nach einem der Ansprüche 5 und 6, **dadurch gekennzeichnet,** daß der besagte Teil mit nicht kreisförmigem Querschnitt (58) einen vieleckigen äußeren Querschnitt und eine Vertiefung (59) mit einem vieleckigen inneren Querschnitt aufweist, die an einer Abschlußfläche des besagten Teils mündet.

8. Einstellknopf nach einem der Ansprüche 5 bis 7, **dadurch gekennzeichnet,** daß die besagten Zähne (66) in einem Umfangsbereich (57d) des besagten scheibenförmigen Teils ausgebildet sind und sich radial zum Innern der besagten Aufnahme (68) erstrecken.

9. Einstellknopf nach Anspruch 8, **dadurch gekennzeichnet,** daß der besagte Umfangsbereich (57d) zur Außenseite der Aufnahme hin konisch erweitert ist und daß die besagten Zähne (66) eine Höhe besitzen, die vom Boden der Aufnahme nach außen zunimmt, und einen allgemein dreieckigen Querschnitt aufweisen.

10. Einstellknopf nach einem der Ansprüche 5 bis 9, **dadurch gekennzeichnet,** daß die besagten Rippen (60) radial nach außen über die Umfangskante des scheibenförmigen Teils (57) hinaus vorstehen.

11. Einstellknopf nach Anspruch 10 **, dadurch gekennzeichnet,** daß die besagten Rippen (60) von dem besagten konvexen ringförmigen Teil (57b, 57c, 57d) aus über dessen gesamte radiale Ausdehnung vorstehen und in einer freien Kante enden, die sich in einer allgemeinen Richtung quer zur Drehachse erstreckt.

12. Einstellknopf nach Anspruch 11 , **dadurch gekennzeichnet,** daß der scheibenförmige Teil auf der Seite der Rippen (60) eine zweite ringförmige Aufnahme (69) definiert, die sich im Verhältnis zu den besagten Rippen radial nach innen erstreckt.

13. Einstellknopf nach Anspruch 12 , **dadurch gekennzeichnet,** daß einige (60') der besagten Rippen radial nach innen verlängert werden, um die besagte zweite ringförmige Aufnahme (69) in mehrere Sektoren zu unterteilen.

14. Einstellknopf nach Anspruch 12 oder 13 , **dadurch gekennzeichnet,** daß der scheibenförmige Teil (57) auf der Seite der ersten Aufnahme (68) und radial zu deren Innern eine Reihe von im wesentlichen radial ausgerichteten zweiten Zähnen (64) umfaßt.

15. Einstellknopf nach Anspruch 14 , **dadurch gekennzeichnet,** daß die besagten zweiten Zähne (64) eine Höhe haben, die von innen nach außen zunimmt, und einen allgemein dreieckigen Querschnitt aufweisen.

16. Scheinwerfer für Kraftfahrzeuge, umfassend ein Gehäuse (10), das einen Lampe und einen Reflektor (20) enthält und das durch eine Abdeckscheibe (30) verschlossen ist, und einen Betätigungsstift (150) zur Orientierung des Reflektors, der auf dessen Rückseite aufliegt und geradlinig verschiebbar ist, **dadurch gekennzeichnet**, daß der besagte Betätigungsstift durch einen Einstellknopf (50) nach einem der vorangehenden Ansprüche verstellt wird, der an dem besagten Gehäuse (10) gelagert ist.

17. Scheinwerfer nach Anspruch 16 , **dadurch gekennzeichnet,** daß das Gehäuse eine zurückversetzte Muffe (11) umfaßt, die für die nicht demontierbare Aufnahme des Montageteils (51) des Einstellknopfes (50) bestimmt ist.

18. Scheinwerfer nach Anspruch 17 , **dadurch gekennzeichnet,** daß das Gehäuse in dem Bereich, in dem die besagte zurückversetzte Muffe nach außen mündet, eine ringförmige Auskehlung (12) für die Positionierung eines elastischen Dichtungs- und Spielausgleichelements (70) umfaßt.

19. Scheinwerfer nach Anspruch 16 , **dadurch gekennzeichnet,** daß sein Gehäuse auf seiner Außenfläche mindestens eine Anordnung (13) zur Führung eines Werkszeugs für das Zusammenwirken mit dem Betätigungsteil des Einstellknopfes umfaßt.
